# EUROPÄISCHE PATENTSCHRIFT

(11) **EP 2 919 629 B1**
(45) Veröffentlichungstag und Bekanntmachung des Hinweises auf die Patenterteilung: **23.05.2018**
(21) Anmeldenummer: 13774366.2
(22) Anmeldetag: 11.09.2013
(51) Int. Cl.: A47J 31/42, A47J 42/56

(54) **KAFFEEVOLLAUTOMAT**
FULLY AUTOMATIC COFFEE MACHINE
DISTRIBUTEUR DE CAFÉ ENTIÈREMENT AUTOMATIQUE

(30) Priorität: 13.11.2012 DE 202012104381 U
(43) Veröffentlichungstag der Anmeldung: 23.09.2015
(73) Patentinhaber: Eugster/Frismag AG, 8580 Amriswil (CH)
(72) Erfinder: EICHER, Heinz, 8645 Jona (CH)
(74) Vertreter: Patentanwälte Behrmann Wagner PartG mbB
(86) Internationale Anmeldenummer: PCT/EP2013/068852
(87) Internationale Veröffentlichungsnummer: WO 2014/075828

(56) Entgegenhaltungen:
- DE-A1- 10 147 284
- DE-B- 1 061 492
- FR-A- 1 117 198
- GB-A- 577 714

## Beschreibung

Die vorliegende Erfindung betrifft einen Kaffeevollautomaten nach dem Oberbegriff des Anspruchs 1.

Aus dem Stand der Technik sind Kaffeevollautomaten bekannt, bei denen eine Kaffeemühle mit einem Mahlwerk zum Mahlen von Kaffeebohnen zu Kaffeepulver eingesetzt wird. Die Kaffeebohnen werden dem Mahlwerk hierfür durch eine Zuleitung zugeleitet. Bei diesen Mahlwerken treibt ein Elektromotor ein bewegliches Element des Mahlwerks, insbesondere einen Mahlring oder Mahlkegel an, um durch die Relativbewegung zwischen dem beweglichem Element und dem stationären Teil des Mahlwerks die dazwischen liegenden Kaffeebohnen zu mahlen. Das gemahlene Kaffeepulver wird in einer Brüheinheit mit Wasser aufgegossen, welches durch Wassererhitzungsmittel erhitzt wurde. Die einzelnen elektrisch betriebenen Komponenten des Kaffeevollautomats, insbesondere die Kaffeemühle, die Wassererhitzungsmittel und die Brüheinheit, werden üblicherweise durch gemeinsame Stromversorgungsmittel, insbesondere ein an das Stromnetz angeschlossenes Netzteil, mit Strom versorgt.

Beim Mahlen von Kaffeebohnen kommt es durch Reibung im Mahlwerk zu einer Wärmeentwicklung in der Kaffeemühle. Diese Wärmeentwicklung kann sich zum einen negativ auf den Geschmack auswirken, da sich durch die Wärme Aromastoffe aus dem Kaffeepulver verflüchtigen können. Desweiteren kann sich die Wärmeentwicklung negativ auf die Funktionsfähigkeit der einzelnen Kaffeemühlenkomponenten auswirken.

Zusätzlich besteht bei Kaffeemühlen das Problem, dass sich das Kaffeepulver im Mahlwerk aufstauen kann, wodurch das bewegliche Element des Mahlwerks blockiert werden kann. Ein solches Blockieren hat zur Folge, dass der Stromverbrauch des Elektromotors stark ansteigt (da mangels Bewegung der entgegengesetzte und somit den Stromverbrauch mindernde Induktionsstrom im Motor nicht induziert wird). Je nach Grad der Verstopfung kann sich die Kaffeemühle hierdurch so stark erhitzen, dass es die Qualität des Kaffeepulvers stark beeinträchtigt wird. Bei besonders starker Hitzeentwicklung kann es zusätzlich zu irreparablen Schäden an der Kaffeemühle, insbesondere am Elektromotor und/oder Mahlwerk, kommen.

In der DE 101 47 284 A1 kommen zur Vermeidung des Einflusses der Hitzebildung durch das Mahlen auf das Aroma des Kaffeepulvers Kühlmittel, beispielsweise in Form von Peltier-Elementen, am Mahlwerk zum Einsatz, die das Mahlwerk aktiv abkühlen. Diese vorgeschlagene Lösung hat den Nachteil, dass unabhängig von der tatsächlich vorherrschenden Betriebstemperatur gekühlt wird, wodurch es einerseits zu einer nicht benötigten Kühlung kommen, die den Leistungsverbrauch der Kaffeemaschine unnötig erhöht. Zum anderen ist es beispielsweise bei einem Ausfall der Kühlmittel nicht sichergestellt, dass die am Mahlwerk vorherrschende Betriebstemperatur in einem zulässigen Wertebereich bleibt und eine Beschädigungstemperatur nicht überschreitet. Dies kann auch Eintreten, wenn die Kühlmittel nicht ausreichend dimensioniert sind, um der tatsächlich auftretenden Wärmeentwicklung wirksam entgegen zu wirken.

Aus der DE 1 061 492 A, die sich mit einer eigenständigen Kaffeemühle und nicht mit in Kaffeevollautomaten integrierten Kaffeemühlen beschäftigt, ist es bekannt, einen Bimetallschalter in der Motorstromversorgung vorzusehen. Eine Temperaturüberwachung des Mahlwerks ist mit der bekannten Anordnung nicht möglich.

Die FR 1 117 198 A beschreibt ebenfalls eine Einzelkaffeemühle, nicht eine in einem Kaffeevollautomaten integrierte Kaffeemühle.

Die GB 577 714 A zeigt ebenfalls eine elektromotorisch angetriebene Einzel-, d.h. nicht in einem Kaffeevollautomaten integrierte Kaffeemühle.

Ausgehend von dem vorgenannten Stand der Technik liegt der Erfindung die Aufgabe zu Grunde, einen Kaffeevollautomaten anzugeben, der eine Beschädigung des Kaffeepulvers und der Kaffeemühle durch Überhitzung zuverlässig verhindert.

Diese Aufgabe wird durch einen Kaffeevollautomaten mit den Merkmalen des Anspruchs 1 gelöst, nämlich einem Kaffeevollautomat mit einer Kaffeemühle mit einem Mahlwerk zum Mahlen von aus einem Kaffeebohnenspeicher durch eine Zuleitung der Kaffeemühle zugeführten Kaffeebohnen zu Kaffeepulver, wobei die Kaffeemühle einen dem Mahlwerk zugeordneten Elektromotor umfasst, der ein bewegliches Element des Mahlwerks in einem Mahlgehäuse antreibend ausgebildet ist und der über mindestens eine einen Motorstrom leitenden Motorstromversorgungsleitung mit Stromversorgungsmitteln verbunden ist. sowie Wassererhitzungsmitteln zum Erhitzen von Wasser und eine Brüheinheit zum Auslaugen des Kaffeepulvers durch das erhitzte Wasser, wobei Strombegrenzungsmittel vorgesehen sind, die als Reaktion auf eine Betriebstemperatur der Kaffeemühle den Motorstrom begrenzend ausgebildet und angeordnet sind. Die Wassererhitzungsmittel sowie die Brüheinheit sind jeweils über weitere Stromversorgungsleitungen mit den selben Stromversorgungsmitteln stromleitend verbunden, beispielsweise werden sie unmittelbar oder mittelbar (beispielsweise mittels zwischengeschaltetem Spannungswandler) über einen gemeinsamen Netzstecker durch das Stromnetz, insbesondere 230 V, mit Strom versorgt. Erfindungsgemäß ist in der Motorstromversorgungsleitung des Elektromotors zudem mindestens ein Heizelement angeordnet.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Durch die erfindungsgemäßen temperaturabhängigen Strombegrenzungsmittel wird einer Überhitzung der Kaffeemühle durch temperaturabhängige Reduktion des Motorstromes erreicht, wodurch auch zwangsläufig die Mahlleistung des Mahlwerkes, und somit eine Wärmebildung durch Reibung, reduziert wird.

Bevorzugt sind die Strombegrenzungsmittel als Temperaturschaltmittel ausgebildet, wobei ab Überschreiten einer Schalttemperatur ein Kontakt in den Temperaturschaltmitteln geöffnet wird, also die Temperaturschaltmittel schalten. Durch Abkühlung der Temperaturschaltmittel wird der Kontakt wieder in den vorherigen Zustand überführt, also wieder geschlossen. Die Temperaturschaltmittel unterbrechen als Reaktion auf ein Überschreiten einer vorgegebenen Schalttemperatur im oder am Mahlwerk die Stromversorgung des Elektromotors durch die Stromversorgungsmittel. Hierdurch wird der Elektromotor angehalten oder zumindest mit einer reduzierten Leistung betrieben, sodass der Mahlvorgang gestoppt und/oder verlangsamt wird. Hierdurch wird sicher gestellt, dass durch einen blockierten, sich ständig weiter erhitzenden Elektromotor das Mahlwerk nicht überhitzt wird, sondern ein bestimmter Temperaturwert am Mahlwerk nicht überschritten wird.

Besonders bevorzugt umfassen die Temperaturschaltmittel einen Bimetall-Schalter, also einen Verbund aus zwei Metallen mit unterschiedlichen Wärmeausdehnungskoeffizienten, oder sind als Bimetall-Schalter ausgebildet. Bei solchen Bimetall-Schaltern ändert sich durch die unterschiedliche Ausdehnung der Metalllagen die Form bzw. Lage in Abhängigkeit der Temperatur, wobei ab Überschreiten einer Schalttemperatur ein Kontakt im Bimetall-Schalter geöffnet oder geschlossen wird, also der Bimetall-Schalter schaltet. Durch Abkühlung des Bimetall-Schalters kann der Kontakt wieder in den vorherigen Zustand überführt werden, also wieder geschlossen werden. Durch geeignete Wahl der Metalle und deren Dimensionierung kann die Schalttemperatur, ab der die Temperaturschaltmittel die Stromversorgung zum Elektromotor bzw. den Stromkreis über den Elektromotor zumindest teilweise unterbricht, definiert werden. Solche Bimetall-Schalter sind als Bauteile weit erhältlich in einer Vielzahl von Legierungskombinationen, beispielsweise Zink/Stahl oder Zink/Messing.

Die Schalttemperatur der Temperaturschaltmittel liegt bevorzugt in einem Bereich von mindestens 50°C bis 200°, bevorzugt mindestens 75° bis 150°, weiter bevorzugt mindestens 90°. Hierdurch kann ein optimaler Betrieb des Mahlwerks gewährleistet werden, ohne dass dessen Normalbetrieb durch nicht erforderliche Stromunterbrechungen beeinträchtigt wird.

Bevorzugt sind die Temperaturschaltmittel, insbesondere bei Ausbildung als Bimetall-Schalter, stromführender Teil des Versorgungsstromkreises des Elektromotors, sodass bei einem Öffnen der Temperaturschaltmittel mindestens eine Teilleitung bzw. ein Teilstrang der Stromversorgungsleitung unmittelbar unterbrochen wird. Hierdurch lässt sich ein besonders einfacher und unkomplizierter Aufbau ohne zusätzliche Elemente wie Relais, Sensor-/Aktorschaltungen und/oder Mikrokontroller realisieren.

Erfindungsgemäß ist vorgesehen in der Stromversorgung des Elektromotors mindestens ein stromstärkengeregeltes Heizelement anzuordnen, das in Reihe zu dem Elektromotor geschaltet ist, insbesondere in Form eines Vorwiderstandes, an dem eine von der Stromstärke abhängige Verlustleistung als Wärme umgesetzt wird. Hierdurch wird in direkter Abhängigkeit vom Strom, der durch den Elektromotor fließt, Wärme erzeugt. Dies hat den Vorteil, dass die Temperaturschaltmittel auch zur Stromüberwachung des Motorstroms eingesetzt werden können. Durch eine solche Ausbildung hat es sich als herausgestellt, dass insbesondere bei einem Blockieren des Elektromotors einer Erwärmung der Kaffeemühle frühzeitig entgegen gewirkt werden kann, bevor sich die Wärmeentwicklung durch den Motor bis zu den Temperaturschaltmitteln ausgebreitet hat.

Ein vorbeschriebenes Heizelement kann in Serie zu den Strombegrenzungsmitteln geschaltet sein. Hierdurch wird dieses Heizelement bei einem Schalten der Temperaturschaltmittel automatisch mit abgeschaltet oder zumindest der Stromfluss durch das Heizelement reduziert.

Ergänzend oder alternativ kann mindestens ein Heizelement parallel zu den Temperaturschaltmitteln geschaltet sein. Sind die Temperaturschaltmittel bei dieser Anordnung im geöffneten Zustand, so fließt ein höherer Strom durch das Heizelement, sodass diese stärker heizen (als im geschlossenen Zustand der Temperaturschaltmittel). Bei dieser Ausführung können die Temperaturschaltmittel durch die Wärmeentwicklung am Heizelement nach einmaligen Öffnen geöffnet gehalten bleiben. Erst durch ein Trennen der Stromversorgung des Heizelementes, beispielsweise durch Unterbrechung aller Stromleitungen zur Kaffeemühle, für eine Zeit, die ausreichend ist, damit die Temperaturschaltmittel sich genügend abkühlen, um wieder in den geschlossenen Zustand überführt zu werden, wird die normale Stromversorgung des Elektromotors wieder hergestellt.

Insbesondere bei Bimetall-Schaltern kann das Heizelement Teil des Schaltelements sein, bevorzugt in Form einer Substratlage, die auf mindestens eine der Metalllagen aufgebracht wird. In diesem Fall wird das Heizelement automatisch mit den Temperaturschaltmitteln geschaltet werden.

Um Beschädigungen des Mahlwerks wirksam entgegen zu wirken, hat es sich als vorteilhaft herausgestellt, dass die Temperaturschaltmittel die Temperatur des Mahlwerks in einem Abstand von unter 5 cm, bevorzugt unter 4 cm, weiter bevorzugt unter 3 cm, besonders bevorzugt unter 2 cm, insbesondere unter 1 cm, zum Mahlwerk, insbesondere zu dem beweglichen Element des Mahlwerks, insbesondere zu einem Mahlring oder Mahlkegel, erfassend ausgebildet ist. Vorteilhaft sind die Temperaturschaltmittel so angeordnet, dass sie sowohl eine Überhitzung des Mahlwerks als auch des Elektromotors erfassen.

Besonders bevorzugt liegen die Temperaturschaltmittel unmittelbar formschlüssig an der Kaffeemühle, insbesondere dem Mahlwerk und/oder an dem Elektromotor an.

Auch ist es denkbar mehrere Temperaturschaltmittel, insbesondere mehrere vorbeschriebene Bimetall-Schalter mit unterschiedlichen Schalttemperaturen, in verschiedenen Strängen der Stromleitung vorzusehen, wodurch sich auf einfache und robuste Weise eine gestufte Stromregulierung erreichen lässt.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1: ein schematischer Aufbau eines Ausführungsbeispiels eines erfindungsgemäßen Kaffeevollautomats,
- Fig. 2: ein schematischer Aufbau eines ersten Ausführungsbeispiel der Strombegrenzungsmittel des in Fig. 1 verwendeten Bimetall-Schalters, und in
- Fig. 3: ein schematischer Aufbau eines zweiten Ausführungsbeispiel der Strombegrenzungsmittel des in Fig. 1 verwendeten Bimetall-Schalters.

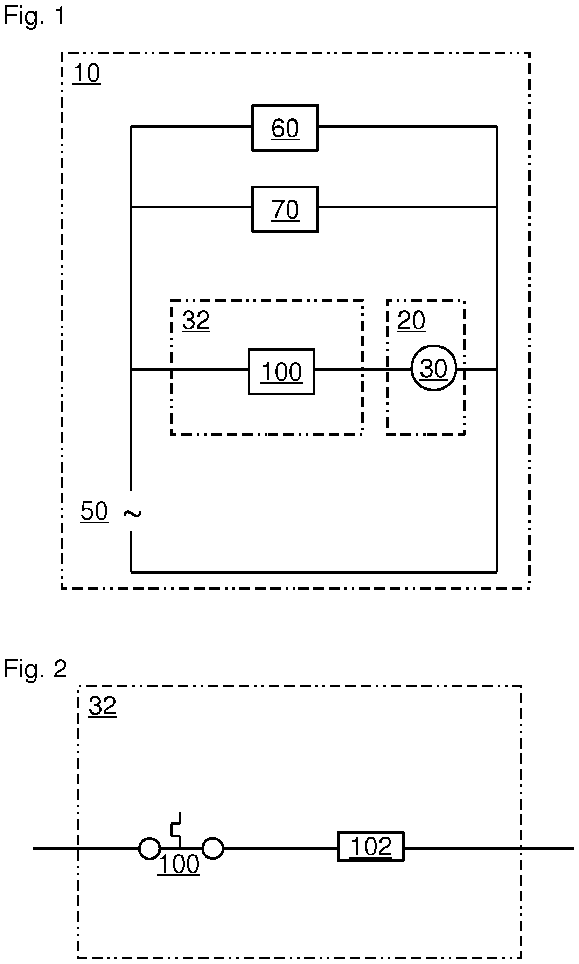

Bei dem in Fig. 1 gezeigten schematischen Aufbauschema eines Ausführungsbeispiels eines erfindungsgemäßen Kaffeevollautomats 10 sind Wassererhitzungsmittel 60, eine Brüheinheit 70 sowie ein einem (nicht dargestelltem) Mahlwerk 22 zugeordneter Elektromotor 30, hier als Teil einer Kaffeemühle 20 ausgebildet, stromleitend mit Stromversorgungsmitteln 50, beispielsweise einem Netzanschluss, verbunden.

Die Stromversorgung des Elektromotors 30 erfolgt hierbei über eine Stromversorgungsleitung 32, die Strombegrenzungsmittel 100 umfasst.

Zwischen den Stromversorgungsmitteln und den Wassererhitzungsmitteln 60, der Brüheinheit 70 und/oder dem Elektromotor 30 können Spannungswandlungsmittel vorgesehen sein. Insbesondere kann es sinnvoll sein, beispielsweise durch ein Netzteil, die Versorgungsspannung an den Stromversorgungsmitteln (beispielsweise Netzspannung von 230V) über Elektromotor 30 und die Stromversorgungsleitung 32 auf eine niedrigere Spannung (beispielsweise 24V) zu wandeln.

Die Strombegrenzungsmittel 100 sind derart ausgebildet und in dem Kaffeevollautomaten 10 angeordnet, dass sie als Reaktion auf eine Betriebstemperatur der Kaffeemühle 20 einen in der Stromversorgungsleitung 32 fließenden Motorstrom, mit dem der Elektromotor 30 betrieben wird, begrenzen können.

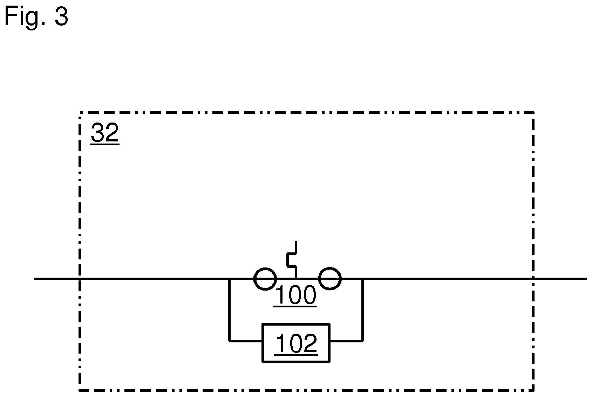

Mögliche Ausgestaltungen der Strombegrenzungsmittel 100 als Temperaturschaltmittel mit Bimetall-Schaltern 104 sind beispielhaft in den Figuren 2 und 3 dargestellt.

In Fig. 2 ist ein Heizelement 102 in Reihe zu den Temperaturschaltmitteln geschaltet. Befinden sich die Temperaturschaltmittel 102 im geschlossenen Zustand, so fließt der Motorstrom auch über das Heizelement 102, wodurch dieses sich in Abhängigkeit des Motorstroms erhitzt.

In Fig. 3 ist ein Heizelement 102 parallel zu den Temperaturschaltmitteln geschaltet. Bei geschlossenen Temperaturschaltmitteln 102 fließt der Großteil des Stroms über die Temperaturschaltmittel. Durch den geringen Stromfluss durch das Heizelement 102 heizt dieses nicht oder nur unwesentlich.

Öffnen sich die Temperaturschaltmittel, so fließt ein größerer Strom über das Heizelement 102, wodurch sich dieses stärker erhitzt. Durch das Heizelement 102 können somit die einmal geöffneten Temperaturschaltmittel im geöffneten Zustand gehalten werden.

Damit sich die Temperaturschaltmittel wieder schließen muss der Stromkreis über das Heizelement 102 für eine ausreichende Zeit unterbrochen werden, damit sich die Temperaturschaltmittel so abkühlen können, dass sich ihr Kontakt wieder schließt.

## Patentansprüche

1. Kaffeevollautomat (10) mit einer Kaffeemühle (20) mit einem Mahlwerk (22) zum Mahlen von aus einem Kaffeebohnenspeicher durch eine Zuleitung dem Mahlwerk zugeführten Kaffeebohnen zu Kaffeepulver, wobei die Kaffeemühle (20) einen dem Mahlwerk (22) zugeordneten Elektromotor (30) umfasst, der ein bewegliches Element des Mahlwerks in einem Mahlgehäuse antreibend ausgebildet ist und der über mindestens eine einen Motorstrom leitenden Motorstromversorgungsleitung (32) mit Stromversorgungsmitteln (50) verbunden ist, sowie Wassererhitzungsmitteln (60) zum Erhitzen von Wasser und eine Brüheinheit (70) zum Auslaugen des Kaffeepulvers durch das erhitzte Wasser, wobei die Wassererhitzungsmittel (60) über weitere Stromversorgungsleitungen ebenfalls mit den Stromversorgungsmitteln stromleitend verbunden sind,
**dadurch gekennzeichnet,**
**dass** Strombegrenzungsmittel (100) vorgesehen sind, die als Reaktion auf eine Betriebstemperatur der Kaffeemühle (20) den Motorstrom begrenzend ausgebildet und angeordnet sind, und dass in der Motorstromversorgungsleitung (32) des Elektromotors mindestens ein Heizelement (102) angeordnet ist.

2. Kaffeevollautomat nach Anspruch 1,
**dadurch gekennzeichnet,**
**dass** die Strombegrenzungsmittel (100) als Temperaturschaltmittel ausgebildet sind, die als Reaktion auf ein Überschreiten einer vorgegebenen Schalttemperatur der Kaffeemühle (20) die Motorstromversorgungsleitung (32) des Elektromotors (30) ganz oder teilweise unterbrechend ausgebildet sind.

3. Kaffeevollautomat nach Anspruch 1 oder 2,
**dadurch gekennzeichnet,**
**dass** die Temperaturschaltmittel einen Bimetall-Schalter umfassen.

4. Kaffeevollautomat nach Anspruch 3,
**dadurch gekennzeichnet,**
**dass** der Bimetall-Schalter mindestens eine Lage aus Zink, Stahl und/oder Messing aufweist.

5. Kaffeevollautomat nach einem der vorhergehenden Ansprüche,
**dadurch gekennzeichnet,**
**dass** die vorgegebene Schalttemperatur in einem Bereich von mindestens 50°C bis 200°, bevorzugt mindestens 75° bis 150°, weiter bevorzugt bei mindestens 90° liegt.

6. Kaffeevollautomat nach einem der vorhergehenden Ansprüche,
**dadurch gekennzeichnet,**
**dass** die Temperaturschaltmittel stromführender Teil der Motorstromversorgungsleitung (32) des Elektromotors (30) sind.

7. Kaffeevollautomat nach einem der vorhergehenden Ansprüche,
**dadurch gekennzeichnet,**
**dass** das Heizelement (102) in Reihe zu den Temperaturschaltmitteln geschaltet ist.

8. Kaffeevollautomat nach einem der Ansprüche 1 bis 6,
**dadurch gekennzeichnet,**
**dass** das Heizelement (102) parallel zu den Temperaturschaltmitteln geschaltet ist.

9. Kaffeevollautomat nach einem der Ansprüche 1 bis 6,
**dadurch gekennzeichnet,**
**dass** das Heizelement (102) Teil der Temperaturschaltmittel, insbesondere in Form einer Substratlage, ist.

10. Kaffeevollautomat nach einem der vorhergehenden Ansprüche,
**dadurch gekennzeichnet,**
**dass** die Temperaturschaltmittel die Betriebstemperatur des Mahlwerks (22) in einem Abstand von unter 5 cm, bevorzugt unter 4 cm, weiter bevorzugt unter 3 cm, besonders bevorzugt unter 2 cm, insbesondere unter 1 cm, zum Mahlwerk (22), insbesondere zu dem beweglichen Element des Mahlwerks, zum Elektromotor (30) und/oder einem Lager des Mahlwerks, erfassend ausgebildet ist.

11. Kaffeevollautomat nach Anspruch 10,
**dadurch gekennzeichnet,**
**dass** die Betriebstemperatur des Mahlwerks (22) an die Temperaturschaltmittel über Wärmeleitmittel übertragen wird.

12. Kaffeevollautomat nach einem der vorhergehenden Ansprüche,
**dadurch gekennzeichnet,**
**dass** die Temperaturschaltmittel unmittelbar an dem Mahlgehäuse, einem Lager des Mahlwerks (22) und/oder am Elektromotor anliegen.

13. Kaffeevollautomat nach einem der vorhergehenden Ansprüche,
**dadurch gekennzeichnet,**
**dass** das bewegliche Element des Mahlwerks ein Mahlring oder Mahlkegel ist.

## Claims

1. A fully automatic coffee machine (10) comprising a coffee mill (20) having a grinder (22) for grinding coffee beans supplied to the grinder from a coffee-bean storage through a supply line into coffee powder, the coffee mill (20) comprising an electric motor (30) which is assigned to the grinder (22), is configured to drive a mobile element of the grinder in a grinder housing and is connected to current supply means (50) via at least one motor current supply line (32) conducting a motor current, and comprising water heating means (60) for heating water and a brewing unit (70) for leaching the coffee powder by means of the heated water, the water heating means (60) also being connected to the current supply means via other current supply lines,
**characterized in that**
current limiting means (100) are provided which are configured and disposed to limit the motor current in response to an operating temperature of the coffee mill (20), and that at least one heating element (102) is disposed in the motor current supply line (32) of the electric motor.

2. The fully automatic coffee machine according to claim 1,
**characterized in that**
the current limiting means (100) are configured as temperature switching means which are configured to fully or partially interrupt the motor current supply line (32) of the electric motor (30) in response to a predetermined switching temperature of the coffee mill (20) being exceeded.

3. The fully automatic coffee machine according to claim 1 or 2,
**characterized in that**
the temperature switching means comprise a bimetal switch.

4. The fully automatic coffee machine according to claim 3,
**characterized in that**
the bimetal switch has at least one layer of zinc, steel and/or brass.

5. The fully automatic coffee machine according to any one of the preceding claims,
**characterized in that**
the predetermined switching temperature is in a range of at least 50 °C to 200 °C, preferably at least 75 °C to 150 °C, further preferably at least 90 °C.

6. The fully automatic coffee machine according to any one of the preceding claims,
**characterized in that**
the temperature switching means are a current-carrying part of the motor current supply line (32) of the electric motor (30).

7. The fully automatic coffee machine according to any one of the preceding claims,
**characterized in that**
the heating element (102) is connected in series with the temperature switching means.

8. The fully automatic coffee machine according to any one of claims 1 to 6,
**characterized in that**
the heating element (102) is connected in parallel with the temperature switching means.

9. The fully automatic coffee machine according to any one of claims 1 to 6,
**characterized in that**
the heating element (102) is part of the temperature switching means, in particular in the form of a substrate layer.

10. The fully automatic coffee machine according to any one of the preceding claims,
**characterized in that**
the temperature switching means are configured to register the operating temperature of the grinder (22) at a distance of less than 5 cm, preferably less than 4 cm, further preferably less than 3 cm, especially preferably less than 2 cm, in particular less than 1 cm to the grinder (22), in particular to the mobile element of the grinder, to the electric motor (30) and/or to a bearing of the grinder.

11. The fully automatic coffee machine according to claim 10,
**characterized in that**
the operating temperature of the grinder (22) is transmitted to the temperature switching means via heat-conducting means.

12. The fully automatic coffee machine according to any one of the preceding claims,
**characterized in that**
the temperature switching means are in direct contact with the grinder housing, with a bearing of the grinder (22) and/or with the electric motor.

13. The fully automatic coffee machine according to any one of the preceding claims,
**characterized in that**
the mobile element of the grinder is a grinding ring or a grinding cone.

## Revendications

1. Machine à café entièrement automatique (10) comprenant un moulin à café (20) comprenant un broyeur (22) destiné à moudre en café moulu des grains de café en lesquels le broyeur est alimenté à partir d'un réservoir de grains de café par un conduit d'alimentation, le moulin de café (20) comprenant un moteur électrique (30) assigné au broyeur (22), le moteur électrique (30) étant configuré de manière à entraîner un élément mobil du broyeur dans un boîtier du broyeur et étant connecté à des moyens d'alimentation en courant (50) par au moins une ligne d'alimentation en courant moteur (32) conduisant du courant moteur, et comprenant des moyens de chauffage d'eau (60) destinés à chauffer de l'eau et une unité de percolation (70) destinée à lessiver le café moulu à l'aide de l'eau chauffée, les moyens de chauffage d'eau (60) étant aussi connectés aux moyens d'alimentation en courant par d'autres lignes d'alimentation en courant,
**caractérisée en ce que**
des moyens de limitation de courant (100) sont prévus, qui sont configurés et disposés de manière à limiter le courant moteur en réponse à une température de fonctionnement du moulin à café (20), et **en ce qu'**au moins un élément de chauffage (102) est disposé dans la ligne d'alimentation en courant moteur (32) du moteur électrique.

2. Machine à café entièrement automatique selon la revendication 1,
**caractérisée en ce que**
les moyens de limitation de courant (100) sont configurés comme moyens de commutation de température qui sont configurés de manière à interrompre complètement ou partiellement la ligne d'alimentation en courant moteur (32) du moteur électrique (30) en réponse à un dépassement d'une température de commutation prédéterminée du moulin à café (20).

3. Machine à café entièrement automatique selon la revendication 1 ou la revendication 2,
**caractérisée en ce que**
les moyens de commutation de température comprennent un interrupteur bimétallique.

4. Machine à café entièrement automatique selon la revendication 3,
**caractérisée en ce que**
l'interrupteur bimétallique a au moins une couche en zinc, en acier et/ou en laiton.

5. Machine à café entièrement automatique selon l'une quelconque des revendications précédentes,
**caractérisée en ce que**
la température de commutation prédéterminée est dans une plage d'au moins 50 °C à 200 °C, de préférence au moins 75 °C à 150 °C, aussi préférablement de 90 °C.

6. Machine à café entièrement automatique selon l'une quelconque des revendications précédentes,
**caractérisée en ce que**
les moyens de commutation de température sont une partie conductrice de courant de la ligne d'alimentation en courant moteur (32) du moteur électrique (30).

7. Machine à café entièrement automatique selon l'une quelconque des revendications précédentes,
**caractérisée en ce que**
l'élément de chauffage (102) est connecté en série avec les moyens de commutation de température.

8. Machine à café entièrement automatique selon l'une quelconque des revendications 1 à 6,
**caractérisée en ce que**
l'élément de chauffage (102) est connecté en parallèle avec les moyens de commutation de température.

9. Machine à café entièrement automatique selon l'une quelconque des revendications 1 à 6,
**caractérisée en ce que**
l'élément de chauffage (102) fait partie des moyens de commutation de température, notamment sous forme d'une couche de substrat.

10. Machine à café entièrement automatique selon l'une quelconque des revendications précédentes,
**caractérisée en ce que**
les moyens de commutation de température sont configurés de manière à détecter la température de fonctionnement du broyeur (22) à une distance inférieure à 5 cm, de préférence inférieure à 4 cm, aussi préférablement inférieure à 3 cm, de préférence particulière inférieure à 2 cm, notamment inférieure à 1 cm, par rapport au broyeur (22), notamment par rapport à l'élément mobile du broyeur, au moteur électrique (30) et/ou à un palier du broyeur.

11. Machine à café entièrement automatique selon la revendication 10,
**caractérisée en ce que**
la température de fonctionnement du broyeur (22) est transmise aux moyens de commutation de température par des moyens thermoconducteurs.

12. Machine à café entièrement automatique selon l'une quelconque des revendications précédentes,
**caractérisée en ce que**
les moyens de commutation de température sont en contact direct avec le boîtier du broyeur, avec un palier du broyeur (22) et/ou avec le moteur électrique.

13. Machine à café entièrement automatique selon l'une quelconque des revendications précédentes,
**caractérisée en ce que**
l'élément mobile du broyeur est un anneau de broyage ou un cône de broyage.
